# EUROPEAN PATENT APPLICATION

(11) **EP 4 663 965 A1**
(43) Date of publication of application: **17.12.2025**
(21) Application number: 24753278.1
(22) Date of filing: 02.02.2024
(51) Int. Cl.: F16C 33/46, F16C 19/06, F16C 19/26, F16C 33/38

(54) **ROLLING BEARING AND SPINDLE DEVICE FOR MACHINE TOOL**

(30) Priority: 08.02.2023 JP 2023017847
(71) Applicant: NSK LTD., Tokyo 141-8560 (JP)
(72) Inventor: KENMOCHI Kenta, Fujisawa-shi, Kanagawa 251-8501 (JP)
(74) Representative: Grünecker Patent- und Rechtsanwälte PartG mbB
(86) International application number: PCT/JP2024/003580
(87) International publication number: WO 2024/166835

(57) **Abstract**

This rolling bearing comprises: an inner ring having an inner raceway formed in an outer circumferential surface thereof; an outer ring having an outer raceway formed in an inner circumferential surface thereof; a plurality of rolling elements that are provided between the inner raceway and the outer raceway so as to be freely rollable; and a retainer having a plurality of pockets in which the rolling elements are retained. The retainer has a pair of annular parts that are disposed side by side in the axial direction, and a plurality of columnar parts that are disposed spaced away from each other in the circumferential direction so as to connect between the pair of annular parts. At least one of the pair of annular parts has a plurality of bulgingly protruding portions that are formed on the outer circumferential surface in the circumferential direction so as to be spaced away from each other and that are guided by the inner circumferential surface of the outer ring. The bulgingly protruding portions are disposed adjacent to the respective pockets in the axial direction.

## Description

### TECHNICAL FIELD

The present invention relates to a rolling bearing and a machine tool spindle device.

### BACKGROUND ART

A rolling bearing used in recent machine tool spindle devices and the like is used in a wide range of rotation speeds, from low to high, and is required to rotate stably and quietly in any range. Further, in the rolling bearing, lubrication is one of important factors for stable and quiet rotation, and stable and quiet rotation can be achieved by supplying an appropriate amount of lubricant to a rolling portion and a sliding portion.

However, in a rolling bearing for a machine tool spindle device, the appropriate amount of the lubricant varies depending on the rotation range to be used, and there is a concern that an abnormality of the bearing may often occur due to an incompatibility of the amount. As a matter of course, an abnormality occurs due to insufficient supply of the lubricant, but an abnormality also occurs due to excessive supply of the lubricant. For example, in a high speed rotation range, abnormal heat generation may occur due to heat generated by stirring the lubricant, which may lead to damage to the bearing. In a low speed rotation range, the wedge effect formed by rolling elements and inner and outer ring raceways generates an oil film reaction force, which can cause abnormal vibrations such as self-excited vibration. In such a case, if an amount of lubricant discharged from the rolling bearing is sufficient with respect to an amount of lubricant supplied to the rolling portion and the sliding portion, it is possible to reduce the bearing abnormality described above.

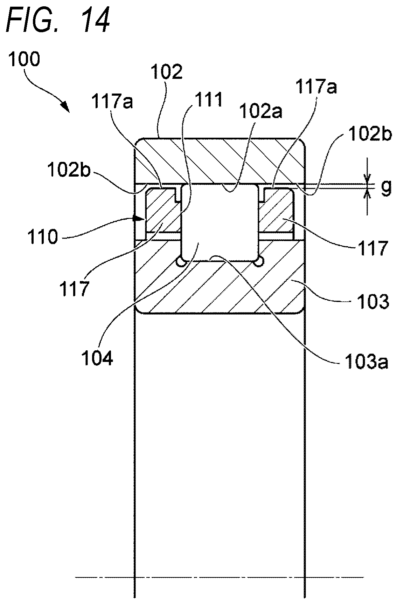

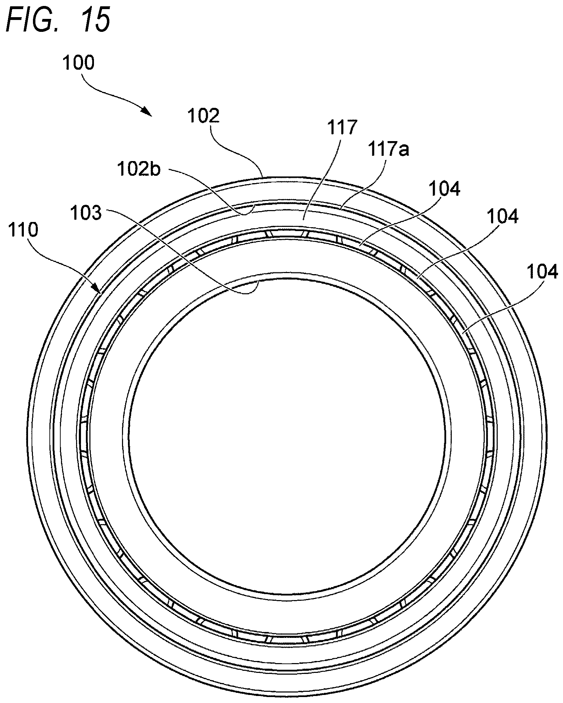

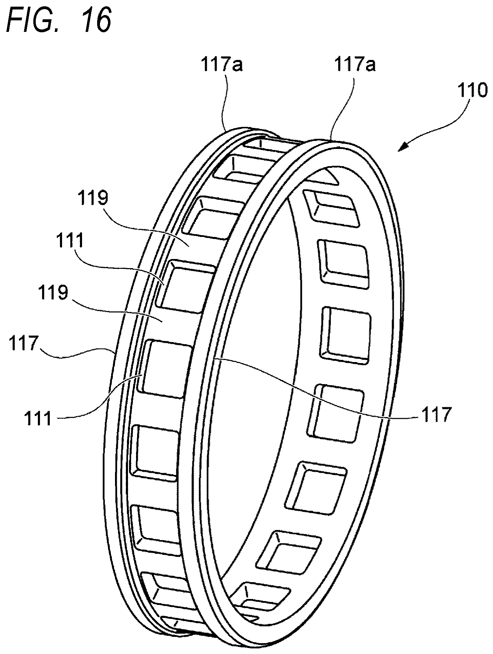

FIGS. 14 to 16 show a rolling bearing 100 formed of a typical cylindrical roller bearing equipped with a cage of an outer ring guide type, and a cage 110 thereof. The rolling bearing 100 includes an outer ring 102 having an outer ring raceway 102a on an inner peripheral surface, an inner ring 103 having an inner ring raceway 103a on an outer peripheral surface, rolling elements 104 formed of a plurality of cylindrical rollers provided in a rollable manner between the outer ring raceway 102a and the inner ring raceway 103a, and a cage 110 having a plurality of pockets 111 for holding the plurality of rolling elements 104 in a rollable manner. This typical outer ring guide type cage 110 includes a pair of annular portions 117 and a plurality of pillar portions 119 arranged at equal intervals in a circumferential direction so as to connect the annular portions 117, and the pocket 111 is formed by the pair of annular portions 117 and two pillar portions 119 adjacent to each other in the circumferential direction. In the rolling bearing 100, outer diameter portions 117a of the pair of annular portions 117 of the cage 110 are guided by an outer ring inner diameter portion 102b as a guided surface. However, due to the structure, a guide gap g between the outer diameter portion 117a and the outer ring inner diameter portion 102b is minute. This causes a problem in that the lubricant discharged from the rolling portion on which the rolling elements 104 roll is blocked and remains in the rolling portion.

As shown in FIGS. 17 to 19, Patent Literature 1 shows a rolling bearing 200 including a cage 210 that has a pair of annular portions 217, a plurality of pillar portions 219 connecting the annular portions 217 to each other, and pockets 211 holding rolling elements 104, in which a plurality of convex protruding portions 221 formed on outer peripheral portions of the pair of annular portions 217 at positions adjacent to the pillar portions 219 in an axial direction. In the rolling bearing 200 having this structure, the lubricant is discharged from between the outer ring inner diameter portion 102b and the annular portion 217 between the convex protruding portions 221 adjacent to each other in the circumferential direction. Therefore, in particular, the centrifugal force, the rotation and revolution energy of the rolling elements 104, and the like during high speed rotation are easily used for discharging the lubricant.

### CITATION LIST

### PATENT LITERATURE

Patent Literature 1: JP6016632B

### SUMMARY OF INVENTION

### TECHNICAL PROBLEM

However, in the rolling bearing in which lubricant is constantly supplied by air using a lubrication method such as oil air lubrication, the discharge property of the lubricant may be insufficient in a low speed rotation range.

Therefore, an object of the present invention is to provide a rolling bearing and a machine tool spindle device that can improve discharge property of a lubricant and operate smoothly in all rotation ranges.

### SOLUTION TO PROBLEM

The present invention has the following configuration.
(1) A rolling bearing including:
   an inner ring having an inner ring raceway on an outer peripheral surface;
   an outer ring having an outer ring raceway on an inner peripheral surface;
   a plurality of rolling elements provided in a rollable manner between the inner ring raceway and the outer ring raceway; and
   a cage having a plurality of pockets for holding the plurality of rolling elements, in which
   the cage includes a pair of annular portions arranged side by side in an axial direction and a plurality of pillar portions arranged at intervals in a circumferential direction to connect the pair of annular portions to each other,
   at least one of the pair of annular portions has a plurality of convex protruding portions that are formed on an outer peripheral surface thereof at intervals in the circumferential direction and are guided by the inner peripheral surface of the outer ring, and
   the convex protruding portions are arranged adjacent to the pockets in the axial direction.
(2) A machine tool spindle device, including:
   the rolling bearing according to (1).

### ADVANTAGEOUS EFFECTS OF INVENTION

According to the present invention, it is possible to improve the discharge property of the lubricant and operate smoothly in all rotation ranges.

### BRIEF DESCRIPTION OF DRAWINGS

[FIG. 1] FIG. 1 is a cross-sectional view of a rolling bearing according to a first embodiment.
[FIG. 2] FIG. 2 is a side view of the rolling bearing according to the first embodiment.
[FIG. 3] FIG. 3 is a perspective view of a cage of the rolling bearing according to the first embodiment.
[FIG. 4] FIG. 4 is a side view of a part of the rolling bearing according to the first embodiment.
[FIG. 5] FIG. 5 is a side view of a part of the rolling bearing according to the first embodiment.
[FIG. 6] FIG. 6 is a perspective view showing a cage according to a second embodiment.
[FIG. 7] FIG. 7 is a perspective view showing a cage according to a third embodiment.
[FIG. 8] FIG. 8 is a perspective view showing a cage according to a fourth embodiment.
[FIG. 9] FIG. 9 is a perspective view showing a cage according to a fifth embodiment.
[FIG. 10] FIG. 10 is a perspective view showing a cage according to a sixth embodiment.
[FIG. 11] FIG. 11 is a graph showing a frequency spectrum of vibration acceleration in a rolling bearing according to Comparative Example 1.
[FIG. 12] FIG. 12 is a graph showing a frequency spectrum of vibration acceleration in a rolling bearing according to Comparative Example 2.
[FIG. 13] FIG. 13 is a graph showing a frequency spectrum of vibration acceleration in a rolling bearing according to Example 1.
[FIG. 14] FIG. 14 is a cross-sectional view of a typical rolling bearing.
[FIG. 15] FIG. 15 is a side view of the typical rolling bearing.
[FIG. 16] FIG. 16 is a perspective view of a cage of the typical rolling bearing.
[FIG. 17] FIG. 17 is a cross-sectional view of a rolling bearing having a related-art structure.
[FIG. 18] FIG. 18 is a side view of the rolling bearing having a related-art structure.
[FIG. 19] FIG. 19 is a perspective view of a cage of the rolling bearing having a related-art structure.

### DESCRIPTION OF EMBODIMENTS

Hereinafter, embodiments of the present invention will be described in detail with reference to the drawings.

### (First Embodiment)

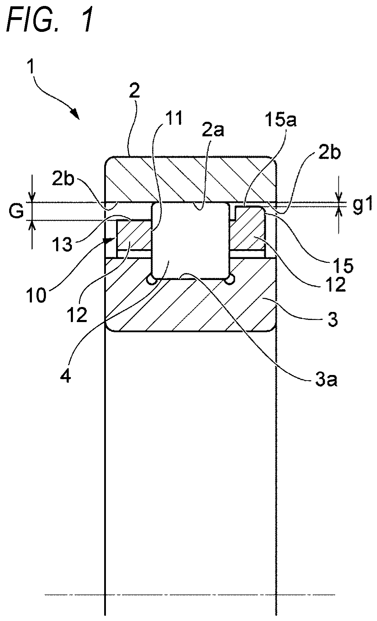

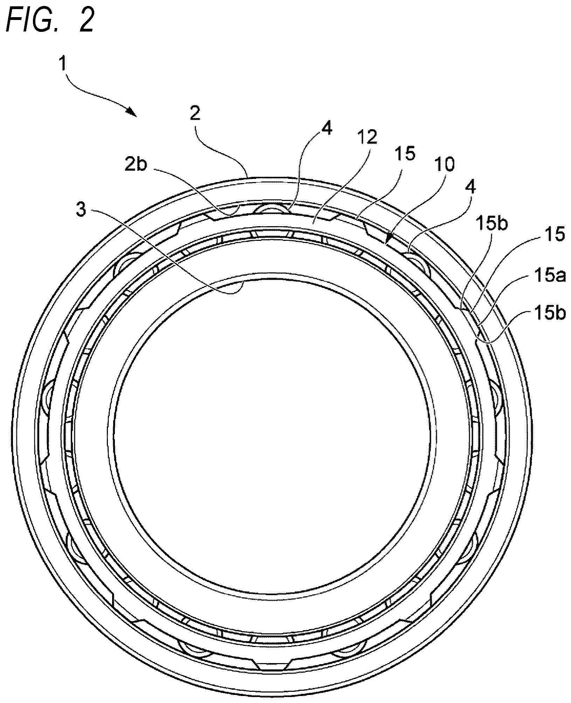

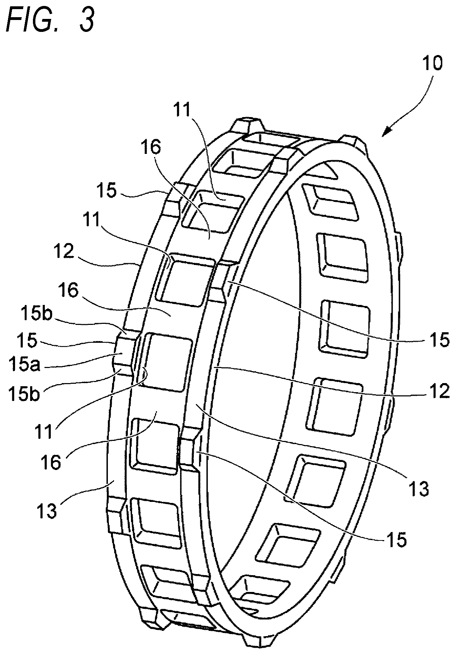

FIG. 1 is a cross-sectional view of a rolling bearing 1 according to a first embodiment. FIG. 2 is a side view of the rolling bearing 1 according to the first embodiment. FIG. 3 is a perspective view of a cage 10 of the rolling bearing 1 according to the first embodiment.

As shown in FIGS. 1 and 2, the rolling bearing 1 according to the first embodiment is a cylindrical roller bearing including a plurality of rolling elements 4 formed of cylindrical rollers.

The rolling bearing 1 includes an outer ring 2 having an outer ring raceway surface 2a formed on an inner peripheral surface, an inner ring 3 having an inner ring raceway surface 3a formed on an outer peripheral surface, the plurality of rolling elements 4, and the cage 10 disposed between the outer ring 2 and the inner ring 3. A plurality of pockets 11 are formed in the cage 10, and the plurality of rolling elements 4 are held in each pocket 11 in a rollable manner.

As shown in FIG. 3, the cage 10 includes a pair of annular portions 12 arranged side by side in an axial direction, and a plurality of pillar portions 16 arranged at equal intervals in a circumferential direction so as to connect both annular portions 12. In the cage 10, the pockets 11 are formed by the pair of annular portions 12 and two pillar portions 16 adjacent to each other in the circumferential direction.

A plurality of convex protruding portions 15 are formed on outer peripheral surfaces 13 of the pair of annular portions 12 at intervals in the circumferential direction. Each of the convex protruding portions 15 has a convex protruding portion outer peripheral surface 15a having a diameter larger than an outer peripheral surface of the pillar portion 16, and a pair of raised portions 15b each continuing from both sides of the convex protruding portion outer peripheral surface 15a in the circumferential direction to the outer peripheral surface 13 of the annular portion 12. The cage 10 is of an outer ring guide type in which the convex protruding portion outer peripheral surface 15a is guided by a cage guide surface 2b formed on the inner peripheral surface of the outer ring 2.

In addition, the convex protruding portions 15 are disposed on the outer peripheral surface 13 of each annular portion 12 and adjacent to the pockets 11 in the axial direction. In the cage 10, the plurality of convex protruding portions 15 of each annular portion 12 are arranged so as to be adjacent to every other pocket 11 in the axial direction. The convex protruding portion 15 of one annular portion 12 is disposed so as to be adjacent in the axial direction to the pocket 11 to which the convex protruding portion 15 of the other annular portion 12 is not adjacent in the axial direction. That is, the convex protruding portions 15 are arranged on the outer peripheral surfaces 13 of the pair of annular portions 12 such that the convex protruding portions 15 are not present on both sides in the axial direction of the pocket 11 and are alternately arranged on the left and right of the pockets 11 in a staggered manner.

As described above, the rolling bearing 1 according to the present embodiment includes the cage 10 in which the plurality of convex protruding portions 15 are formed on the outer peripheral surface 13 of the annular portion 12 at intervals in the circumferential direction, and the convex protruding portion 15 is formed adjacent to only one side of the pocket 11 in the axial direction.

Therefore, even if a guide gap g1 between the convex protruding portion outer peripheral surface 15a and the cage guide surface 2b on one side in the axial direction of the pocket 11 is the same as the guide gap g (see FIG. 14) in the typical rolling bearing 100, a large gap G is formed between the outer peripheral surface 13 of the annular portion 12 and the cage guide surface 2b formed of the inner peripheral surface of the outer ring 2 on the other side in the axial direction of the pocket 11 and on both sides of the pillar portion 16 where the pocket 11 does not exist. Therefore, the lubricant can be smoothly discharged from the gap G. Since the size of the guide gap gl and the size of the gap G are different from each other, a pressure difference occurs between the annular portions 12, air convection occurs, and the discharge of the lubricant is further promoted by the convection action.

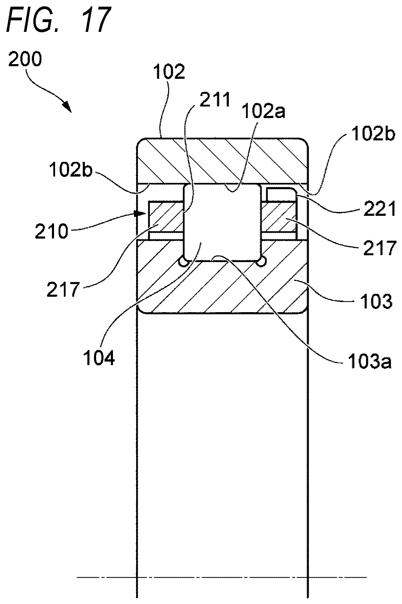

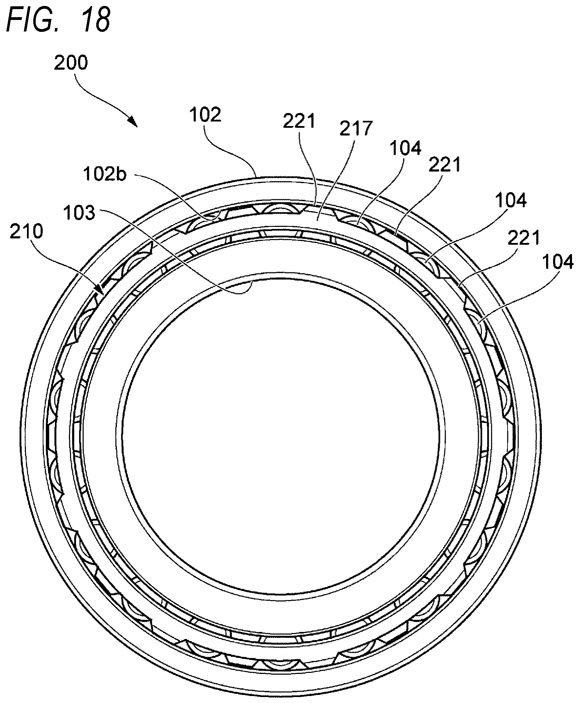

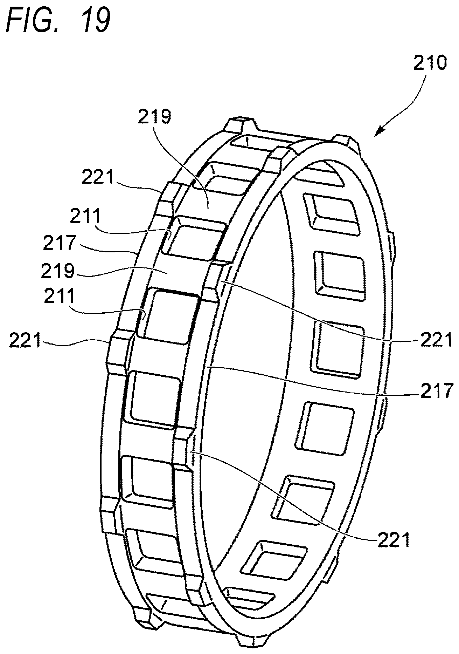

In particular, the convex protruding portions 15 formed as guide portions are disposed adjacent to the pockets 11 in the axial direction and are alternately arranged in the circumferential direction of the pair of annular portions 12. Therefore, a blow-through area between the outer ring 2 and the cage 10 when viewed from the axial direction is larger as compared to a case of the related-art structure in which the convex protruding portions 221 are formed at positions adjacent to the pillar portions 219 in the axial direction (see FIGS. 17 to 19). As a result, even in an oil air circulation system in which the lubricant is constantly supplied by air, the discharge property of the lubricant can be improved not only in a high speed rotation range but also in a low speed rotation range. That is, it is possible to improve the discharge property of the lubricant and operate smoothly in all rotation ranges. Therefore, a machine tool spindle device equipped with the rolling bearing 1 can be operated stably and quietly.

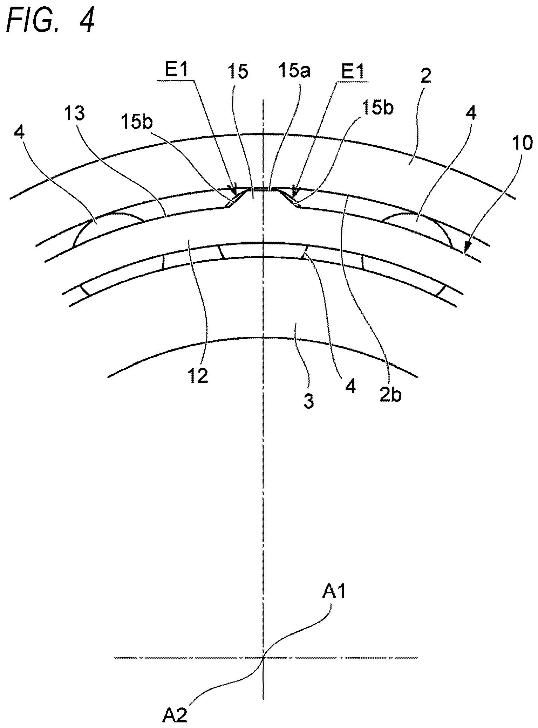

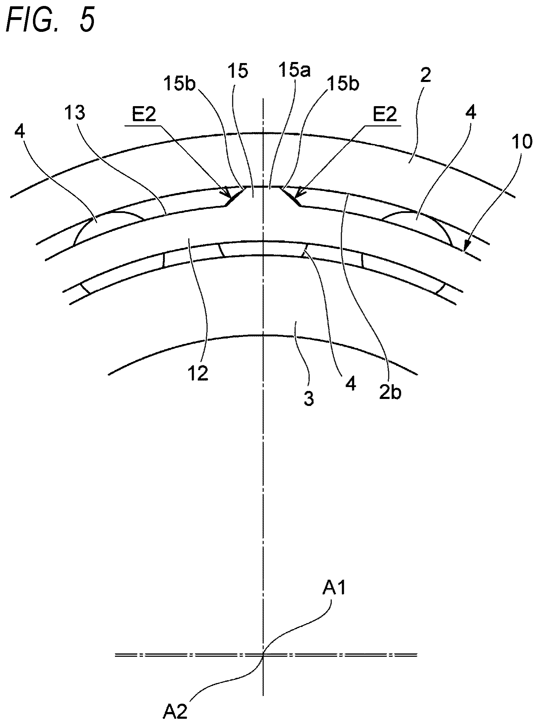

FIGS. 4 and 5 are side views of a part of the rolling bearing 1 according to the first embodiment.

As shown in FIG. 4, in the rolling bearing 1 according to the present embodiment, in a state where a rotation axis A1 of the cage 10 and a revolution axis A2 of the rolling element 4 are aligned, when viewed from the axial direction, it is preferable that the rolling element 4 disposed in the pocket 11 adjacent to the convex protruding portion 15 is not entirely hidden by the convex protruding portion 15, but partially exposed between the outer ring 2 and the cage 10 (see parts E1 in FIG. 4).

Further, as shown in FIG. 5, in the rolling bearing 1 according to the present embodiment, in a state where the convex protruding portion outer peripheral surface 15a of the convex protruding portion 15 of the cage 10 is in contact with the cage guide surface 2b of the outer ring 2, when viewed from the axial direction, it is preferable that the rolling element 4 disposed in the pocket 11 adjacent to the convex protruding portion 15 is not entirely hidden by the convex protruding portion 15, but partially exposed between the outer ring 2 and the cage 10 (see parts E2 in FIG. 5).

As described above, when viewed from the axial direction, as long as a part of the rolling element 4 disposed in the pocket 11 adjacent to the convex protruding portion 15 is exposed between the outer ring 2 and the cage 10, especially when the lubricant is supplied by the oil air circulation system, a part of the air hits the rolling element 4 without being blocked by the convex protruding portion 15, so that an effect of further improving the discharge property of excessive lubricant can be expected.

Next, embodiments including cages having different shapes will be described. The same components as those of the first embodiment are denoted by the same reference numerals, and the description thereof will be omitted.

### (Second Embodiment)

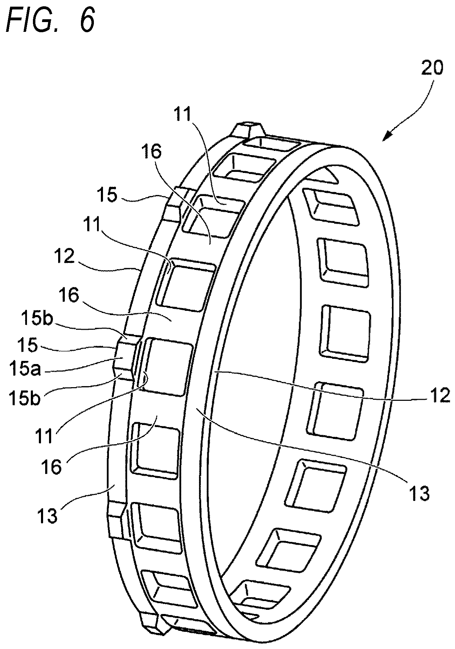

FIG. 6 is a perspective view showing a cage 20 according to a second embodiment.

As shown in FIG. 6, the cage 20 used in the second embodiment has a configuration in which only one annular portion 12 of the pair of annular portions 12 is formed with the convex protruding portions 15 at positions adjacent to the pockets 11 in the axial direction. These convex protruding portions 15 are formed for every other pocket 11.

According to the cage 20, air permeability of the air is improved particularly in the oil air lubrication, and therefore further improvement in the discharge property of the lubricant can be expected.

### (Third Embodiment)

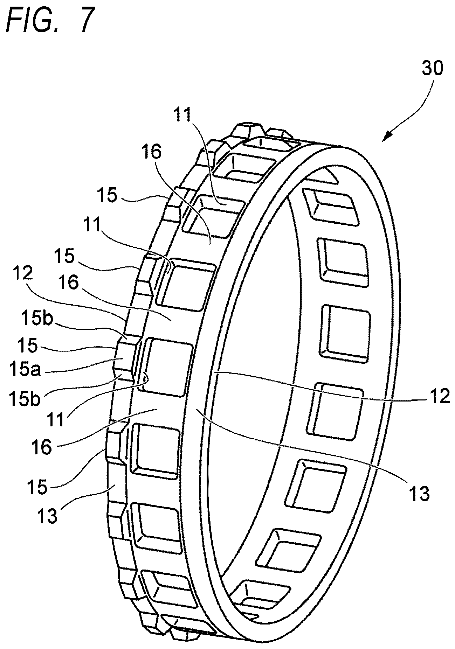

FIG. 7 is a perspective view showing a cage 30 according to a third embodiment.

As shown in FIG. 7, in the cage 30 used in the third embodiment, similarly to the cage 20 used in the second embodiment, only one annular portion 12 of the pair of annular portions 12 is formed with the convex protruding portions 15 at positions adjacent to the pockets 11 in the axial direction. In the cage 30, the plurality of convex protruding portions 15 are formed at positions adjacent to all the pockets 11 in the axial direction.

According to the cage 30, air permeability of the air is also improved particularly in the oil air lubrication, and therefore further improvement in the discharge property of the lubricant can be expected.

Here, in the cage 20 according to the second embodiment in which the convex protruding portions 15 are formed for every other pocket 11 on the one annular portion 12, an arrangement interval of the convex protruding portions 15 when viewed from the axial direction is large, and a displacement amount in a radial direction is larger than that of the cage 10 according to the first embodiment.

On the other hand, in the cage 30 according to the third embodiment, the convex protruding portions 15 are formed on the one annular portion 12, but these convex protruding portions 15 are formed at positions adjacent to all the pockets 11 in the axial direction. Therefore, it can be expected that the air permeability of the air is improved while maintaining the displacement amount of the cage 30 in the radial direction at the same level as that of the cage 10 according to the first embodiment.

### (Fourth Embodiment)

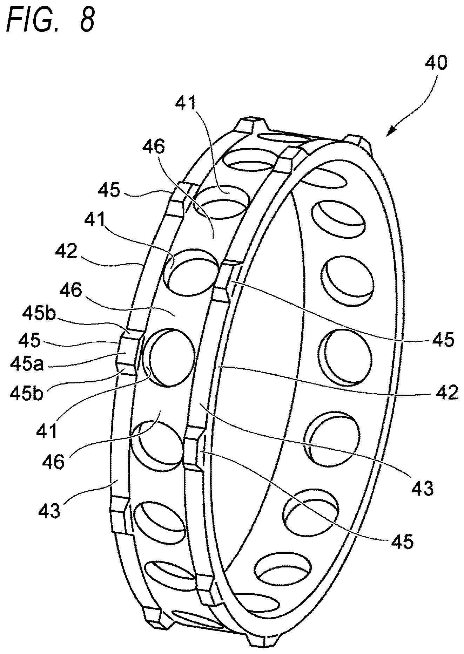

FIG. 8 is a perspective view showing a cage 40 according to a fourth embodiment.

As shown in FIG. 8, a cage 40 according to the fourth embodiment is used for an angular ball bearing including rolling elements 4 formed of balls. Similar to the cage 10 used in the first embodiment, the cage 40 includes a pair of annular portions 42 arranged side by side in the axial direction, and a plurality of pillar portions 46 arranged at predetermined intervals in the circumferential direction so as to connect the annular portions 42. Pockets 41 are formed by the pair of annular portions 42 and two pillar portions 46 adjacent to each other in the circumferential direction. The pocket 41 is formed in a circular shape, and the rolling element 4 formed of a ball is accommodated in the pocket 41 in a rollable manner.

In the cage 40, similarly to the cage 10 used in the first embodiment, a plurality of convex protruding portions 45 are formed on outer peripheral surfaces 43 of the pair of annular portions 42 at intervals in the circumferential direction. Each of the convex protruding portions 45 has a convex protruding portion outer peripheral surface 45a having a diameter larger than an outer peripheral surface of the pillar portion 46, and a pair of raised portions 45b each continuing from both sides of the convex protruding portion outer peripheral surface 45a in the circumferential direction to the outer peripheral surface 43 of the annular portion 42. In the cage 40, the convex protruding portion outer peripheral surface 45a is guided by the cage guide surface 2b formed on the inner peripheral surface of the outer ring 2.

The convex protruding portions 45 are also disposed on the outer peripheral surface 43 of each annular portion 42 and adjacent to the pockets 41 in the axial direction. The plurality of convex protruding portions 45 on each annular portion 42 are arranged so as to be adjacent to every other pocket 41 in the axial direction. That is, the convex protruding portions 45 are arranged on the outer peripheral surfaces 43 of the pair of annular portions 42 such that the convex protruding portions 45 are not present on both sides in the axial direction of the pocket 41 and are alternately arranged on the left and right of the pockets 41 in a staggered manner. With such an arrangement, the lubricant can be smoothly discharged from the angular ball bearing, so that the discharge property of the lubricant can be improved and the operation can be smoothly performed in all rotation ranges.

### (Fifth Embodiment)

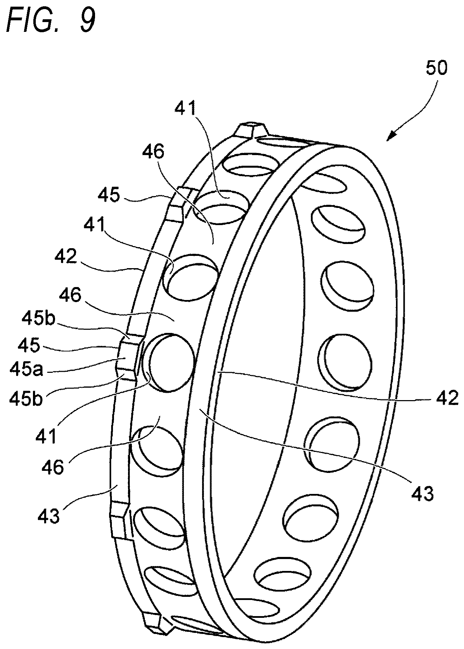

FIG. 9 is a perspective view showing a cage 50 according to a fifth embodiment.

As shown in FIG. 9, similarly to the cage 40 according to the fourth embodiment, the cage 50 used in the fifth embodiment is also used for an angular ball bearing including the rolling elements 4 formed of balls. In the cage 50, the convex protruding portions 45 are formed on only one annular portion 42 of the pair of annular portions 42 at positions adjacent to the pockets 41 in the axial direction. These convex protruding portions 45 are formed for every other pocket 41.

According to the cage 40, similarly to the cage 20 according to the second embodiment, air permeability of the air is improved particularly in the oil air lubrication, and therefore further improvement in the discharge property of the lubricant can be expected.

### (Sixth Embodiment)

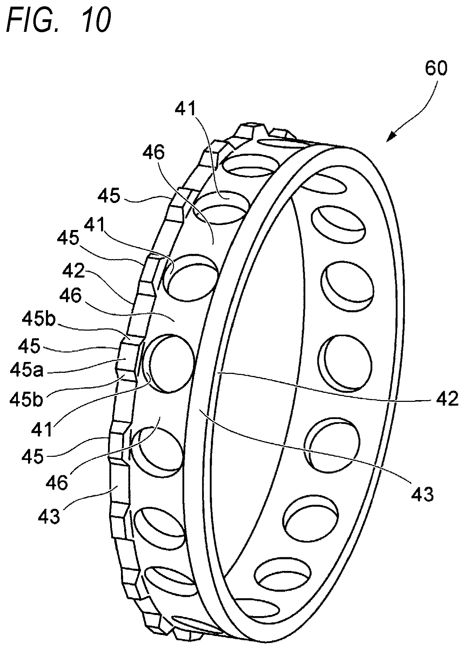

FIG. 10 is a perspective view showing a cage 60 according to a sixth embodiment.

As shown in FIG. 10, in the cage 60 used in the sixth embodiment, similarly to the cage 50 used in the fifth embodiment, only one annular portion 42 of the pair of annular portions 42 is formed with the convex protruding portions 45 at positions adjacent to the pockets 41 in the axial direction. In the cage 60, the plurality of convex protruding portions 45 are formed at positions adjacent to all the pockets 41 in the axial direction.

According to the cage 60, air permeability of the air is also improved particularly in the oil air lubrication, and therefore further improvement in the discharge property of the lubricant can be expected.

In the cage 60, similarly to the cage 30 according to the third embodiment, the convex protruding portions 45 are formed on the one annular portion 42, but these convex protruding portions 45 are formed at positions adjacent to all the pockets 41 in the axial direction. Therefore, it can be expected that the air permeability of the air is improved while maintaining the displacement amount of the cage 60 in the radial direction at the same level as that of the cage 10 according to the first embodiment.

The present invention is not limited to the above-described embodiments, and may be appropriately modified, improved, or the like. Although the cylindrical roller bearing and the angular ball bearing have been described in the above embodiments, the present invention is also applicable to other rolling bearings such as a deep groove ball bearing and a tapered roller bearing. In addition, in consideration of use at high speed rotation, the cage material is preferably a synthetic resin, which is lighter than metal and has excellent wear resistance, such as phenol, polyamide, PPS, PEEK, polyimide, and the like. In addition, a reinforcing agent such as glass fiber, carbon fiber, or aramid fiber may be added thereto.

### Examples

A rolling bearing that supports a rotating shaft was incorporated into an outer cylindrical portion, and a frequency spectrum of vibration acceleration in the outer cylindrical portion was measured when the rotating shaft was rotated while lubricant was supplied to the rolling bearing by an oil air circulation system. The test was performed using the rolling bearing 100 (Comparative Example 1) shown in FIG. 14, the rolling bearing 200 (Comparative Example 2) shown in FIG. 17, and the rolling bearing 1 (Example 1) shown in FIG. 1. Each rolling bearing had an outer diameter of 90 mm, an inner diameter of 55 mm, and a width of 18 mm.

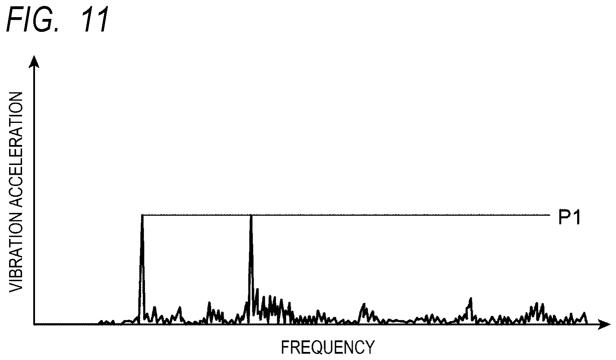

FIGS. 11 to 13 show frequency spectrum of the vibration acceleration measured in the outer cylindrical portion during rotation at 2000 min⁻¹, which is considered to be a relatively low speed, in Comparative Examples 1 and 2 and Example 1.

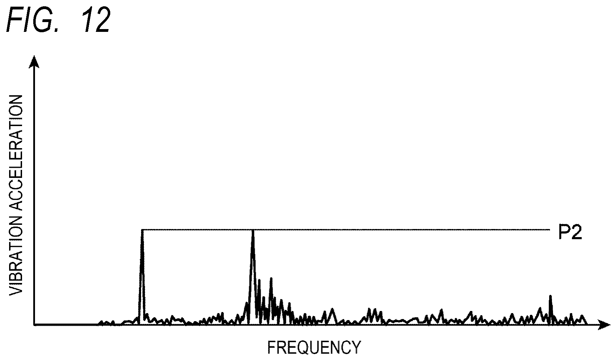

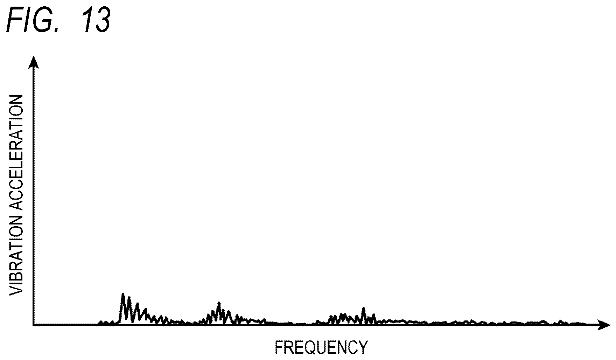

As shown in FIG. 11, a peak P1 considered to be abnormal vibration was confirmed in Comparative Example 1, and as shown in FIG. 12, a peak P2 considered to be abnormal vibration was confirmed also in Comparative Example 2, as in Comparative Example 1. On the other hand, as shown in FIG. 13, a peak considered to be abnormal vibration was not observed in Example 1, and a stable state was confirmed.

From this result, it was found that the occurrence of abnormal vibration was prevented in Example 1, and in particular, the occurrence of abnormal vibration at a low speed in the oil air lubrication, which was cited as a problem in Comparative Example 2, was prevented by the present invention.

As described above, the present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected.

As described above, the following matters are disclosed in the present specification.
(1) A rolling bearing including:
   an inner ring having an inner ring raceway on an outer peripheral surface;
   an outer ring having an outer ring raceway on an inner peripheral surface;
   a plurality of rolling elements provided in a rollable manner between the inner ring raceway and the outer ring raceway; and
   a cage having a plurality of pockets for holding the plurality of rolling elements, in which
   the cage includes a pair of annular portions arranged side by side in an axial direction and a plurality of pillar portions arranged at intervals in a circumferential direction to connect the pair of annular portions to each other,
   at least one of the pair of annular portions has a plurality of convex protruding portions that are formed on an outer peripheral surface thereof at intervals in the circumferential direction and are guided by the inner peripheral surface of the outer ring, and
   the convex protruding portions are arranged adjacent to the pockets in the axial direction.

According to the rolling bearing, even if the guide gap between the convex protruding portion and the inner peripheral surface of the outer ring is narrow on the one side in the axial direction of the pocket, a large gap is formed between the outer peripheral surface of the annular portion and the inner peripheral surface of the outer ring on the other side in the axial direction of the pocket and on both sides of the pillar portion where the pocket does not exist. Therefore, the lubricant can be smoothly discharged from the gap. In addition, a pressure difference occurs between the two annular portions, air convection occurs, and the discharge of the lubricant is further promoted by the convection action.

In particular, the convex protruding portions formed as the guide portions are disposed adjacent to the pockets in the axial direction. Therefore, the blow-through area between the outer ring and the cage when viewed from the axial direction is larger as compared with the case where the convex protruding portion is disposed at a position adjacent to the pillar portion in the axial direction. As a result, even in an oil air circulation system in which the lubricant is constantly supplied by air, the discharge property of the lubricant can be improved not only in a high speed rotation range but also in a low speed rotation range. That is, it is possible to improve the discharge property of the lubricant and operate smoothly in all rotation ranges.

(2) In the rolling bearing according to (1), the rolling element disposed in the pocket adjacent to the convex protruding portion in the axial direction is partially exposed from the convex protruding portion when viewed from the axial direction.

According to this rolling bearing, in the case where the lubricant is supplied by an oil air circulation system, a part of the air hits the rolling elements without being blocked by the convex protruding portion, so that an effect of further improving the discharge property of excess lubricant can be expected.

(3) In the rolling bearing according to (1) or (2), the rolling element includes a cylindrical roller.

According to this rolling bearing, in the cylindrical roller bearing including cylindrical rollers, the discharge property of the lubricant in all rotation ranges can be improved, and stable and quiet rotation can be achieved.

(4) In the rolling bearing according to (1) or (2), the rolling element includes a ball.

According to this rolling bearing, in the angular ball bearing including balls, the discharge property of the lubricant in all rotation ranges can be improved, and stable and quiet rotation can be achieved.

(5) A machine tool spindle device, including: the rolling bearing according to any one of (1) to (4).

According to this machine tool spindle device, it is possible to operate stably and quietly.

The present application is based on a Japanese patent application (No. 2023-017847) filed on February 8, 2023, contents of which are incorporated herein by reference.

### REFERENCE SIGNS LIST

1 rolling bearing
2 outer ring
2a outer ring raceway (outer ring raceway surface)
3 inner ring
3a inner ring raceway (inner ring raceway surface)
4 rolling element
10, 20, 30, 40, 50, 60 cage
11 pocket
12 annular portion
15 convex protruding portion
16 pillar portion

## Claims

1. A rolling bearing comprising:
an inner ring having an inner ring raceway on an outer peripheral surface;
an outer ring having an outer ring raceway on an inner peripheral surface;
a plurality of rolling elements provided in a rollable manner between the inner ring raceway and the outer ring raceway; and
a cage having a plurality of pockets for holding the plurality of rolling elements,
wherein the cage includes a pair of annular portions arranged side by side in an axial direction and a plurality of pillar portions arranged at intervals in a circumferential direction to connect the pair of annular portions to each other,
wherein at least one of the pair of annular portions has a plurality of convex protruding portions that are formed on an outer peripheral surface thereof at intervals in the circumferential direction and are guided by the inner peripheral surface of the outer ring, and
wherein the convex protruding portions are arranged adjacent to the pockets in the axial direction.

2. The rolling bearing according to claim 1,
wherein the rolling element disposed in the pocket adjacent to the convex protruding portion in the axial direction is partially exposed from the convex protruding portion when viewed from the axial direction.

3. The rolling bearing according to claim 1 or 2,
wherein the rolling element includes a cylindrical roller.

4. The rolling bearing according to claim 1 or 2, further comprising
wherein the rolling element includes a ball.

5. A machine tool spindle device, comprising:
the rolling bearing according to claim 1 or 2.

6. A machine tool spindle device, comprising:
the rolling bearing according to claim 3.

7. A machine tool spindle device, comprising:
the rolling bearing according to claim 4.
